(19) Europäisches Patentamt
European Patent Office
Office européen des brevets

(11) **EP 2 515 163 A1**

(12) **EUROPEAN PATENT APPLICATION**
published in accordance with Art. 153(4) EPC

(43) Date of publication:
**24.10.2012 Bulletin 2012/43**

(51) Int Cl.:
**G02F 1/1343** (2006.01)　　**G02F 1/1368** (2006.01)

(21) Application number: **10837524.7**

(86) International application number:
**PCT/JP2010/072253**

(22) Date of filing: **10.12.2010**

(87) International publication number:
**WO 2011/074497 (23.06.2011 Gazette 2011/25)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **16.12.2009 JP 2009285567**

(71) Applicant: **Sharp Kabushiki Kaisha**
**Osaka-shi, Osaka 545-8522 (JP)**

(72) Inventors:
• **YAMASHITA, Yuki**
**Osaka-shi, Osaka 545- 8522 (JP)**
• **SHOHRAKU, Akihiro**
**Osaka-shi, Osaka 545 - 8522 (JP)**
• **TAKEUCHI Masanori**
**Osaka-shi, Osaka 545 - 8522 (JP)**

(74) Representative: **Müller - Hoffmann & Partner**
**Patentanwälte**
**Innere Wiener Strasse 17**
**81667 München (DE)**

(54) **LIQUID CRYSTAL DISPLAY DEVICE**

(57)　The liquid crystal display device **(100)** of this invention has pixels that are arranged in columns and rows to form a matrix pattern. The device includes: an active-matrix substrate **(10)** that includes pixel electrodes **(11)** provided for those pixels, scan lines **(12)** running in a row direction, and signal lines **(13)** running in a column direction; a counter substrate **(20)** facing the active-matrix substrate **(10)**; and a liquid crystal layer **(30)** interposed between the active-matrix substrate **(10)** and the counter substrate **(20)**. Each of the signal lines **(13)** includes, in an area given to each of pixel rows defined by those pixels, a first straight portion **(13a)** that overlaps with only one of two pixel electrodes **(11)** that are adjacent to the signal line **(13)**, a second straight portion **(13b)** that overlaps with only the other pixel electrode **(11)**, and a bent portion **(13c)** that connects the first and second straight portions **(13a, 13b)** together. The respective bent portions **(13c)** of two arbitrary ones of the signal lines **(13)**, which are adjacent to each other in the row direction, are arranged at different positions in the column direction. The present invention provides a liquid crystal display device that can easily adjust the source-drain capacitance **Csd** on a pixel-by-pixel basis.

FIG.2

**Description**

**TECHNICAL FIELD**

The present invention relates to a liquid crystal display device.

**BACKGROUND ART**

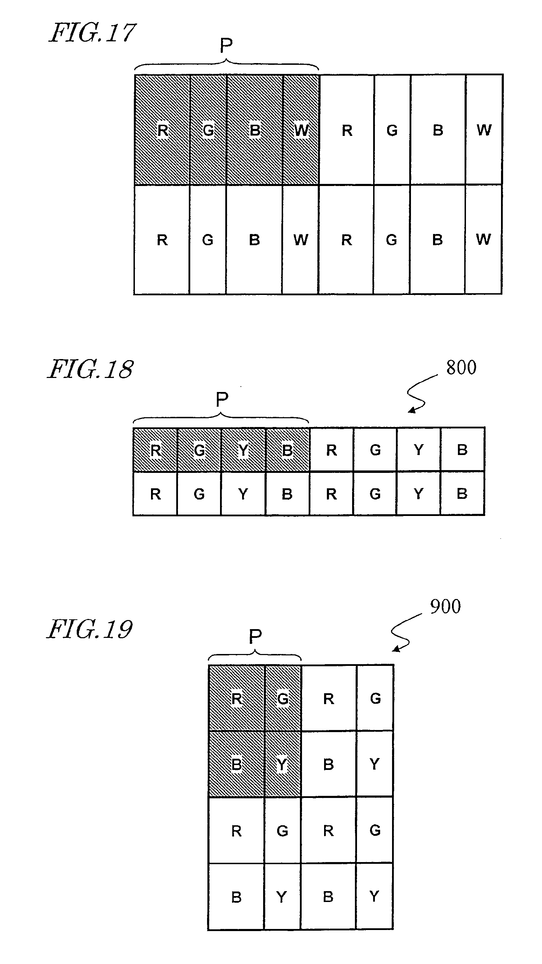

Liquid crystal display devices are currently used in a variety of applications. In a general liquid crystal display device, one picture element consists of three pixels respectively representing red, green and blue, which are the three primary colors of light, thereby conducting a display operation in colors.
A known liquid crystal display device, however, can reproduce colors that fall within only a narrow range (which is usually called a "color reproduction range"), which is a problem. If the color reproduction range is narrow, then some of the object colors (i.e., the colors of various objects existing in Nature, see Non-Patent Document No. 1) cannot be represented. Thus, to broaden the color reproduction range of liquid crystal display devices, a technique for increasing the number of primary colors for use to perform a display operation has recently been proposed.
For example, Patent Document No. 1 discloses a liquid crystal display device **800** in which one picture element **P** is made up of four pixels that include not only red, green and blue pixels **R, G** and **B** representing the colors red, green and blue, respectively, but also a yellow pixel **Y** representing the color yellow as shown in FIG. **18.** That liquid crystal display device **800** performs a display operation in colors by mixing together the four primary colors red, green, blue and yellow that are represented by those four pixels **R, G, B and Y.**
By increasing the number of primary colors for use to conduct a display operation (i.e., by performing a display operation using four or more primary colors), the color reproduction range can be broadened compared to a known liquid crystal display device that uses only the three primary colors for display purposes. Such a liquid crystal display device that conducts a display operation using four or more primary colors will be referred to herein as a "multi-primary-color liquid crystal display device". And a liquid crystal display device that conducts a display operation using the three primary colors will be referred to herein as a "three-primary-color liquid crystal display device".
However, if the number of primary colors for use to conduct a display operation is increased, then the number of pixels per picture element increases, and therefore, the area given to each of those pixels should decrease. Consequently, the lightness of the color represented by each pixel should decrease. For example, if the number of primary colors for use to conduct a display operation is increased from three to four, the area given to each pixel decreases to three-quarters, and the lightness of each pixel drops to three-quarters, too. Also, if the number of primary colors for use to conduct a display operation is increased from three to six, the area given to each pixel decreases to one half, and the lightness of each pixel drops to one half, too.
As for a pixel representing the color green or blue, even if its lightness decreases, the pixel can still represent various object colors well enough. As for a pixel representing the color red, however, if its lightness decreases, the pixel can no longer represent some of those object colors. In this manner, if the lightness decreases due to an increase in the number of primary colors to use, the display quality of the color red will be debased and the color red will turn into a blackish red (i.e., a dark red).
A technique for overcoming such a problem is proposed in Patent Document No. 2. FIG. **19** illustrates a liquid crystal display device **900** as disclosed in Patent Document No. 2. Each picture element **P** of the liquid crystal display device **900** is made up of red, green, blue, and yellow pixels **R, G, B** and **Y.** In the liquid crystal display device **900,** however, the red and blue pixels **R** and **B** have the larger area and the green and yellow pixels **G** and **Y** have the smaller area. By setting the area of the red pixel **R** to be larger than in a situation where a single picture element **P** is simply equally divided into four, the lightness of the color red increases, and therefore, a bright red can be represented.

**CITATION LIST**

**PATENT LITERATURE**

Patent Document No. 1: PCT International Application Japanese National-Phase Patent Publication No. 2004-529396
Patent Document No. 2: PCT International Application Publication No. 2007/148519

**NON-PATENT LITERATURE**

Non-Patent Document No. 1: M. R. Pointer, "The Gamut of Real Surface Colors", Color Research and Application, Vol. 5, No. 3, pp.145-155 (1980)

**SUMMARY OF INVENTION**

**TECHNICAL PROBLEM**

However, if such pixels with the larger area (which will be referred to herein as "larger pixels") and pixels with the smaller area (which will be referred to herein as "smaller pixels") are included in the same mix as in the liquid crystal display device **900** of Patent Document No. 2, then the effective value of the voltage applied to its liquid crystal layer to conduct a display operation in a single color will be different between the larger and smaller pixels.

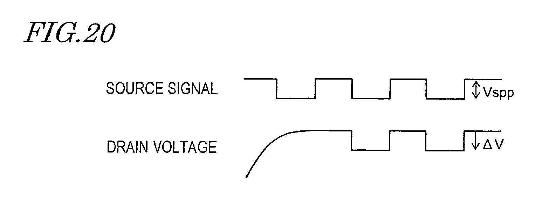

The reason will be described below. If a display signal (source signal) supplied to a signal line changes after a pixel has been charged, a potential at a pixel electrode (drain voltage) also varies due to the presence of a parasitic capacitance (source-drain capacitance) **Csd** between the source and the drain as shown in FIG. **20.** In that case, the magnitude of the variation Δ**V** is represented by the following Equation (1) :

$$\Delta V = Vspp \cdot (Csd/Cpix) \tag{1}$$

where Vspp is the magnitude of variation (i.e., the amplitude) of the source signal, Csd is the source-drain capacitance Csd, and Cpix is the pixel capacitance.

The larger and smaller pixels have substantially the same source-drain capacitance **Csd** but significantly different pixel capacitances **Cpix.** Thus, as can be seen from Equation (1), even if the larger and smaller pixels cause the same magnitude of variation **Vspp** of the source signal, those pixels will cause different magnitudes of variation Δ**v** of the drain voltage. Consequently, the effective value of the voltage applied to the liquid crystal layer becomes significantly different between the larger and smaller pixels, thus debasing the display quality.

In order to overcome such problems, the present invention has been made to provide a liquid crystal display device that can easily adjust the source-drain capacitance Csd on a pixel-by-pixel basis.

**SOLUTION TO PROBLEM**

A liquid crystal display device according to the present invention has a plurality of pixels which are arranged in columns and rows to form a matrix pattern. The device includes: an active-matrix substrate that includes pixel electrodes that are provided for the respective pixels, a plurality of scan lines that run in a row direction, and a plurality of signal lines that run in a column direction; a counter substrate that faces the active-matrix substrate; and a liquid crystal layer that is interposed between the active-matrix substrate and the counter substrate. Each of the plurality of signal lines includes, in an area given to each of multiple pixel rows that are defined by those pixels, a first straight portion that overlaps with only one of two pixel electrodes that are adjacent to the signal line, a second straight portion that overlaps with only the other pixel electrode, and a bent portion that connects the first and second straight portions together. The respective bent portions of two arbitrary ones of the signal lines, which are adjacent to each other in the row direction, are arranged at mutually different positions in the column direction.

In one preferred embodiment, in at least some of the signal lines, the first and second straight portions have mutually different widths.

Another liquid crystal display device according to the present invention has a plurality of pixels which are arranged in columns and rows to form a matrix pattern. The device includes: an active-matrix substrate that includes pixel electrodes that are provided for the respective pixels, a plurality of scan lines that run in a row direction, and a plurality of signal lines that run in a column direction; a counter substrate that faces the active-matrix substrate; and a liquid crystal layer that is interposed between the active-matrix substrate and the counter substrate. Each of the plurality of signal lines includes, in an area given to each of multiple pixel rows that are defined by those pixels, a first straight portion that overlaps with only one of two pixel electrodes that are adjacent to the signal line, a second straight portion that overlaps with only the other pixel electrode, and a bent portion that connects the first and second straight portions together. In at least some of the signal lines, the first and second straight portions have mutually different widths.

In one preferred embodiment, each of the multiple pixel rows includes a larger pixel that has a relatively large area and a smaller pixel that has a relatively small area.

In one preferred embodiment, the area of overlap between the pixel electrode of the larger pixel and a signal line that supplies a grayscale voltage to the pixel electrode of that larger pixel is greater than the area of overlap between the pixel electrode of the smaller pixel and a signal line that supplies a grayscale voltage to the pixel electrode of that smaller pixel.

In one preferred embodiment, the Csd/Cpix ratio of the source-drain capacitance Csd of the larger pixel to a pixel capacitance Cpix is substantially equal to the Csd/Cpix ratio of the source-drain capacitance Csd of the smaller pixel to the pixel capacitance Cpix.

In one preferred embodiment, the larger and smaller pixels are arranged alternately in the row direction.

In one preferred embodiment, the area of overlap between one of two signal lines that are adjacent to the larger pixel and the pixel electrode of that larger pixel is substantially equal to the area of overlap between the other signal line and the pixel electrode of that larger pixel. And the area of overlap between one of two signal lines that are adjacent to the smaller pixel and the pixel electrode of that smaller pixel is substantially equal to the area of overlap between the other signal line and the pixel electrode of that smaller pixel.

In one preferred embodiment, the plurality of pixels includes red, green and blue pixels that represent the colors red, green and blue, respectively.

In one preferred embodiment, the plurality of pixels further includes a yellow pixel that represents the color yellow.

In one preferred embodiment, the red pixel is the larger pixel.

In one preferred embodiment, the blue pixel is the larger pixel and the green and yellow pixels are the smaller pixels.

In one preferred embodiment, each of the plurality of pixels includes a plurality of subpixels, mutually different voltages being applicable to the respective liquid crystal layers of the subpixels.

In one preferred embodiment, the plurality of subpixels are arranged in the column direction, and the bent portion is arranged at a position that has been set for a particular one of the subpixels and each of the plurality of signal lines has a further bent portion that is arranged at a position that has been set for a different subpixel from that particular subpixel.

In one preferred embodiment, the respective further bent portions of two arbitrary ones of the signal lines, which are adjacent to each other in the row direction, are arranged at mutually different positions in the column direction.

## ADVANTAGEOUS EFFECTS OF INVENTION

The present invention provides a liquid crystal display device that can easily adjust the source-drain capacitance Csd on a pixel-by-pixel basis. According to the present invention, for example, in a liquid crystal display device in which multiple different kinds of pixels with mutually different areas are included in the same mix, the variation in the effective voltage applied to the liquid crystal layer can be reduced.

## BRIEF DESCRIPTION OF DRAWINGS

[FIG. 1] A diagram schematically illustrating a liquid crystal display device **100** as a preferred embodiment of the present invention.

[FIG. **2**] A plan view schematically illustrating an area of the liquid crystal display device **100** as a preferred embodiment of the present invention that is given to one picture element **P** (four pixels).

[FIG. **3**] A cross-sectional view schematically illustrating the liquid crystal display device **100** as a preferred embodiment of the present invention as viewed on the plane **3A-3A'** shown in FIG. **2.**

[FIG. **4**] A diagram schematically illustrating the liquid crystal display device **100** as a preferred embodiment of the present invention.

[FIG. **5**] A diagram schematically illustrating a liquid crystal display device **200** as another preferred embodiment of the present invention.

[FIG. **6**] A plan view schematically illustrating an area of the liquid crystal display device **200** as another preferred embodiment of the present invention that is given to one picture element **P** (four pixels).

[FIG. **7**] A diagram schematically illustrating a liquid crystal display device **300** as another preferred embodiment of the present invention.

[FIG. **8**] A plan view schematically illustrating an area of the liquid crystal display device **300** as another preferred embodiment of the present invention that is given to one picture element **P** (three pixels).

[FIG. **9**] A plan view schematically illustrating an area of a liquid crystal display device **400** as another preferred embodiment of the present invention that is given to one picture element **P** (four pixels).

[FIG. **10**] A plan view schematically illustrating an area of a liquid crystal display device **500** as another preferred embodiment of the present invention that is given to one picture element **P** (four pixels).

[FIG. 11] A plan view schematically illustrating an area of a liquid crystal display device **600A** as another preferred embodiment of the present invention that is given to one picture element **P** (four pixels).

[FIG. 12] A plan view schematically illustrating an area of a liquid crystal display device **600B** as another preferred embodiment of the present invention that is given to one picture element **P** (four pixels).

[FIG. 13] A plan view schematically illustrating an area of a liquid crystal display device **600C** as another preferred embodiment of the present invention that is given to one picture element **P** (three pixels).

[FIG. 14] A plan view schematically illustrating an area of a liquid crystal display device **600D** as another preferred embodiment of the present invention that is given to one picture element **P** (four pixels).

[FIG. 15] A plan view schematically illustrating an area of a liquid crystal display device **600E** as another preferred embodiment of the present invention that is given to one picture element **P** (four pixels).

[FIG. 16] A diagram illustrating a modified example of a liquid crystal display device as a preferred embodiment of the present invention.

[FIG. 17] A diagram illustrating another modified example of a liquid crystal display device as a preferred embodiment of the present invention.

[FIG. 18] A diagram schematically illustrating a known liquid crystal display device **800**.

[FIG. 19] A diagram schematically illustrating another known liquid crystal display device **900**.

[FIG. 20] Illustrates the reason why the effective voltage applied to the liquid crystal layer varies in the known liquid crystal display device **900**.

## DESCRIPTION OF EMBODIMENTS

Hereinafter, embodiments of the present invention will be described with reference to the accompanying drawings. It should be noted that the present invention is in no way limited to the specific embodiments to be described below.

(EMBODIMENT 1)

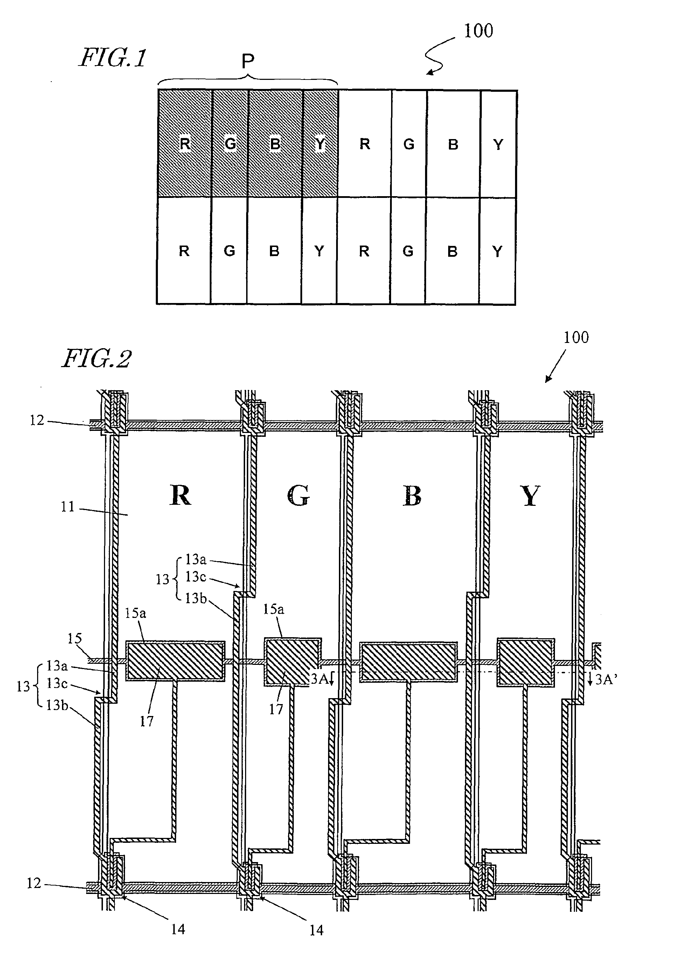

FIG. **1** illustrates a liquid crystal display device **100** as a first embodiment of the present invention. As shown in FIG. **1,** the liquid crystal display device **100** includes a plurality of pixels that are arranged in columns and rows to form a matrix pattern. The pixels include red, green, blue, and yellow pixels **R, G, B** and **Y** representing the colors red, green, blue, and yellow, respectively. One picture element **P,** which is the minimum unit to conduct a display operation in colors, is formed by a set of four pixels that are arranged consecutively in the row direction. In each picture element **P,** the four pixels are arranged in the order of red, green, blue, and yellow pixels **R, G, B** and **Y** from the left to the right.

As shown in FIG. **1,** in this liquid crystal display device 100, the red and blue pixels **R** and **B** have a larger area than the green and yellow pixels **G** and **Y.** That is to say, in this embodiment, multiple pixel rows, which are formed of a plurality of pixels, each include "larger pixels" that have a relatively large area and "smaller pixels" that have a relatively small area. Each of the larger pixels (which is either the red pixel **R** or the blue pixel **B)** is arranged to alternate with one of the smaller pixels (which is either the green pixel **G** or the yellow pixel **Y)** in the row direction.

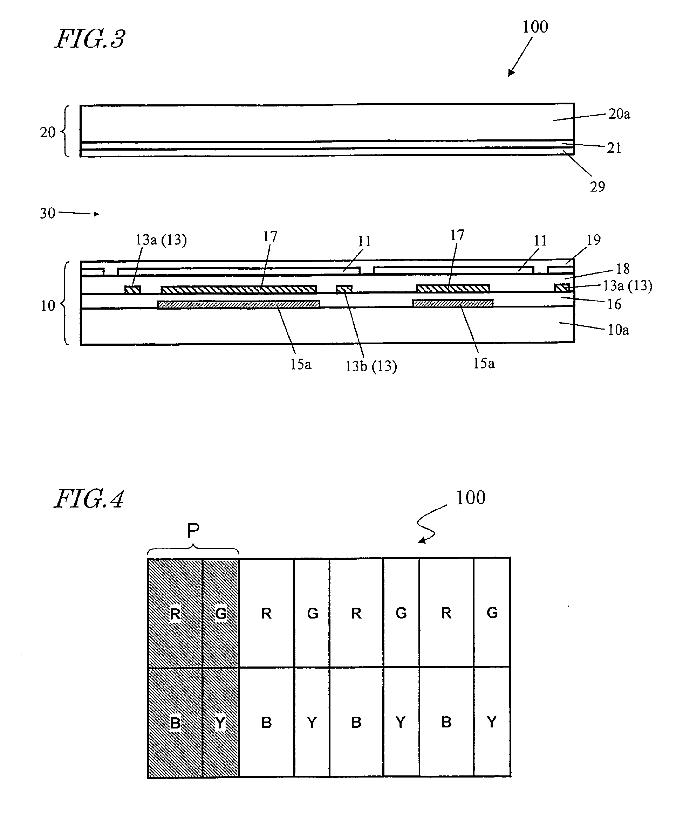

Hereinafter, the structure of this liquid crystal display device **100** will be described in further detail with reference to FIGS. **2** and **3.** FIG. **2** is a plan view illustrating a region of the liquid crystal display device **100** that is allocated to one picture element **P** (i.e., four pixels). FIG. **3** is a cross-sectional view illustrating a region that covers two pixels as viewed along the plane **3A-3A'** shown in FIG. **2.**

The liquid crystal display device **100** includes an active-matrix substrate **10,** a counter substrate **20** that faces the active-matrix substrate **10,** and a liquid crystal layer **30** that is interposed between the active-matrix substrate **10** and the counter substrate **20.**

The active-matrix substrate **10** includes pixel electrodes **11,** each of which is provided for an associated one of the pixels, a plurality of scan lines **12** that run in the row direction, and a plurality of signal lines **13** that run in the column direction. The pixel electrodes **11** are connected to thin-film transistors (TFTs) **14.** Each TFT is supplied with not only a scan signal from its associated scan line **12** but also a display signal from its associated signal line **13.**

The scan lines **12** are arranged on a transparent substrate (e.g., a glass substrate) **10a** with electrically insulating properties. On the transparent substrate **10a,** also arranged is a storage capacitor line **15** that runs in the row direction. The storage capacitor line **15** and the scan lines **12** are made of the same conductor film. A portion **15a** of the storage capacitor line **15** that is located near the center of each pixel has a broader width than the rest of the line **15** and functions as a storage capacitor counter electrode. The storage capacitor counter electrode **15a** is supplied with a storage capacitor counter voltage (CS voltage) from the storage capacitor line **15.**

A gate insulating film **16** is arranged to cover the scan lines **12** and the storage capacitor lines **15.** On the gate insulating film **16,** arranged are not only the signal lines **13** but also storage capacitor electrodes **17,** which are made of the same conductor film as the signal lines **13.** Also, each of the storage capacitor electrodes **17** is electrically connected to the drain electrode of its associated TFT **14** and is supplied with the same voltage as its associated pixel electrode **11** via the TFT **14.**

An interlayer insulating film 18 is arranged to cover the signal lines 13 and the storage capacitor electrodes 17. The pixel electrodes 11 are located on the interlayer insulating film 18. The pixel electrodes 11 are arranged so that their edges overlap with the scan lines 12 and the signal lines 13 with the interlayer insulating film 18 interposed between them.

An alignment film 19 is arranged on the uppermost surface (i.e., the surface that is closest to the liquid crystal layer 30) of the active-matrix substrate 10. Depending on the display mode, the alignment film 19 may be a horizontal alignment film or a vertical alignment film.

The counter substrate **20** includes a counter electrode **21,** which faces the pixel electrodes **11** and which is arranged on a transparent substrate (such as a glass substrate) **20a** with electrically insulating properties. An alignment film **29** is arranged on the uppermost surface (i.e., the surface that is closest to the liquid crystal layer **30)** of the counter substrate **20.** Depending on the display mode, the alignment film **29** may be a horizontal alignment film or a vertical alignment film.

Although not shown in any of the drawings, the counter substrate **20** typically further includes a color filter layer and an opaque layer (i.e., a black matrix). The color filter layer includes red, green, blue, and yellow color filters that transmit red, green, blue, and yellow rays, respectively, and that are associated with the red, green, blue, and yellow pixels **R, G, B** and **Y,** respectively.

The liquid crystal layer **30** includes liquid crystal molecules (not shown) that have either positive or negative dielectric anisotropy depending on the mode of display, and a chiral agent as needed.

In the liquid crystal display device **100** with such a structure, a liquid crystal capacitor $C_{LC}$ is formed by the pixel electrode **11,** the counter electrode **21** that faces the pixel electrode **11,** and the liquid crystal layer **30** interposed between them. Also, a storage capacitor $C_{CS}$ is formed by the storage capacitor electrode **17,** the storage capacitor counter electrode **15a** that faces the storage capacitor electrode **17,** and the gate insulating film **16** interposed between them. And a pixel capacitor **Cpix** is formed by the liquid crystal capacitor $C_{LC}$ and the storage capacitor $C_{CS}$ that is arranged in parallel to the liquid crystal capacitor $C_{LC}$.

As shown in FIG. **2,** each of the signal lines **13** includes, in an area given to each row of pixels, a first straight portion **13a** that overlaps with only one of two pixel electrodes **11** that are adjacent to the signal line **13,** a second straight portion **13b** that overlaps with only the other pixel electrode **11,** and a bent portion **13c** that connects the first and second straight portions **13a** and **13b** together. The first straight portion **13a** of each signal line **13** overlaps with the one pixel electrode **11,** to which a display signal (grayscale voltage) is supplied through the signal line **13** via the TFT **14,** while the second straight portion **13b** overlaps with the other pixel electrode **11.** Therefore, if the signal line **13** through which a grayscale voltage is applied to the pixel electrode **11** of a particular pixel is called "its own source" and if the signal line **13** through which a grayscale voltage is applied to the pixel electrode **11** of a pixel that is adjacent to the former pixel in the row direction is called "other's source", then each pixel electrode **11** is overlapped by the first straight portion **13a** of its own source and by the second straight portion **13b** of other's source.

In the liquid crystal display device **100** of this embodiment, the respective bent portions **13c** of two arbitrary ones of the signal lines **13,** which are adjacent to each other in the row direction, are arranged at mutually different positions in the column direction as shown in FIG. **2.**

Specifically, the bent portion **13c** of the left one of the two signal lines **13** that are adjacent to the red pixel **R** (i.e., its own source for the pixel electrode **11** of the red pixel **R)** is located under the middle of the pixel in the column direction. On the other hand, the bent portion **13c** of the other, right signal line **13** (i.e., other's source for the pixel electrode **11** of the red pixel **R)** is located over the middle of the pixel in the column direction. Meanwhile, the bent portion **13c** of the left one of the two signal lines **13** that are adjacent to the green pixel **G** (i.e., its own source for the pixel electrode **11** of the green pixel **G)** is located over the middle of the pixel in the column direction. On the other hand, the bent portion **13c** of the other, right signal line **13** (i.e., other's source for the pixel electrode **11** of the green pixel **G)** is located under the middle of the pixel in the column direction.

Furthermore, the bent portion **13c** of the left one of the two signal lines **13** that are adjacent to the blue pixel **B** (i.e., its own source for the pixel electrode **11** of the blue pixel **B)** is located under the middle of the pixel in the column direction. On the other hand, the bent portion **13c** of the other, right signal line **13** (i.e., other's source for the pixel electrode **11** of the blue pixel **B)** is located over the middle of the pixel in the column direction. Meanwhile, the bent portion **13c** of the left one of the two signal lines **13** that are adjacent to the yellow pixel **Y** (i.e., its own source for the pixel electrode **11** of the yellow pixel **Y)** is located over the middle of the pixel in the column direction. On the other hand, the bent portion **13c** of the other, right signal line **13** (i.e., other's source for the pixel electrode **11** of the yellow pixel **Y)** is located under the middle of the pixel in the column direction.

If the bent portions **13c** are arranged in this manner, the area of overlap between the pixel electrode **11** of the larger pixel (which is either the red pixel **R** or the blue pixel **B)** and the signal line **13** (i.e., its own source) that supplies a grayscale voltage to that pixel electrode **11** is greater than the area of overlap between the pixel electrode **11** of the smaller pixel (which is either the green pixel **G** or the yellow pixel **Y)** and a signal line **13** (its own source) that supplies a grayscale voltage to that pixel electrode **11.** That is why the source-drain capacitance **Csd** of the larger pixel is greater than the source-drain capacitance **Csd** of the smaller pixel. As a result, the difference in the magnitude of variation Δ**v** (which is represented by Equation (1)) in drain voltage can be reduced, and it is possible to avoid an unwanted situation where the voltages applied to the liquid crystal layer **30** have significantly different effective values between the larger and smaller pixels.

As described above, in the liquid crystal display device **100** of this embodiment, by arranging the respective bent portions **13c** at two different positions in the column direction between two adjacent signal lines **13,** the source-drain capacitance **Csd** of the larger pixel becomes different from that of the smaller pixel. As a result, the variation in the effective voltage applied to the liquid crystal layer **30** can be reduced significantly.

In order to reduce the difference in ΔV between the larger and smaller pixels, the difference between the Csd/Cpix ratio (which is sometimes called a "β value") of the source-drain capacitance **Csd** of the larger pixel to the pixel capacitance **Cpix** and the Csd/Cpix ratio of the source-drain capacitance **Csd** of the smaller pixel to the pixel capacitance **Cpix** needs to be as small as possible. Specifically, it would be beneficial if the difference is ±15% or less. And it would be more beneficial if the respective $\beta$ values (i.e., Csd/Cpix values) of the larger and smaller pixels are substantially equal to each other. If the respective $\beta$ values of the larger and smaller pixels are substantially equal to each other (specifically, if their difference is within ±5%), ΔV can be substantially equal between the larger and smaller pixels.

Strictly speaking, there are two different kinds of source-drain capacitances **Csd,** namely, a parasitic capacitance between its own source and the drain (which will be identified herein by "Csd(self)") and a parasitic capacitance between other's source and the drain (which will be identified herein by "Cs(other)"). If a display operation is conducted in a single color, the potential at a pixel electrode **11** (i.e., the pixel electrode **11** of a lighted pixel) is affected by only a voltage variation at its own source. That is to say, the signal on the other's source does not vary. That is why in this description, the source-drain capacitance **Csd** always refers herein to its own source-drain capacitance **Csd(self)** unless otherwise stated.

On the other hand, if the display operation is conducted in mixed colors (i.e., if the signals on its own source and other's source both vary), the potential at the pixel electrode **11** is affected by a variation in voltage not only on its own source but also on other's source as well. That is why in order to cancel their influences (because voltages of opposite polarities are supplied to its own source and other's source in the case of the source line inversion drive and dot inversion drive), it would be advantageous if its own source-drain capacitance **Csd(self)** is substantially equal to other's source-drain capacitance **Csd(other).** For that reason, as shown in FIG. **2,** the area of overlap between one of two signal lines **13** that are adjacent to the larger pixel (i.e., that are arranged to interpose the larger pixel between them) and the pixel electrode **11** of that larger pixel had better be substantially equal to the area of overlap between the other signal line **13** and the pixel electrode **11** of that larger pixel. The area of overlap between one of two signal lines **13** that are adjacent to the smaller pixel (i.e., that are arranged to interpose the smaller pixel between them) and the pixel electrode **11** of that smaller pixel had better be substantially equal to the area of overlap between the other signal line **13** and the pixel electrode **11** of that smaller pixel. If the larger and smaller pixels are alternately arranged in the row direction as in this embodiment, its own source-drain capacitance Csd(self) and other's source-drain capacitance Csd (other) can be made substantially equal to each other.

In the embodiment described above, the red and blue pixels R and B are supposed to be the larger pixels and the green and yellow pixels G and Y are supposed to be the smaller pixels. However, this is only an example of the present invention and that combination does not always have to be adopted. Rather it may be determined appropriately according to the intended use or specification of the liquid crystal display device which pixels may have the larger (or smaller) area than the others. If the red pixel **R** is the larger pixel as in this embodiment, the lightness of the color red increases and a bright red can be represented, which is beneficial.

Also, in the embodiment described above, multiple pixels are arranged in one row and multiple columns in each picture element **P.** However, those pixels may also be arranged in multiple rows and multiple columns in each picture element **P** as shown in FIG. **4.** Specifically, in the arrangement shown in FIG. **4,** one row of pixels is an alternate arrangement of red and green pixels **R** and **G,** which are the larger and smaller pixels, respectively, and its adjacent row of pixels is an alternate arrangement of blue and yellow pixels **B** and **Y,** which are the larger and smaller pixels, respectively. That is to say, those four pixels are arranged in two columns and two rows in each picture element **P.** Even with such an arrangement adopted, if the bent portions **13c** of two adjacent signal lines **13** are arranged at mutually different positions in the column direction, the variation in the effective voltage applied to the liquid crystal layer **30** can be reduced.

(EMBODIMENT 2)

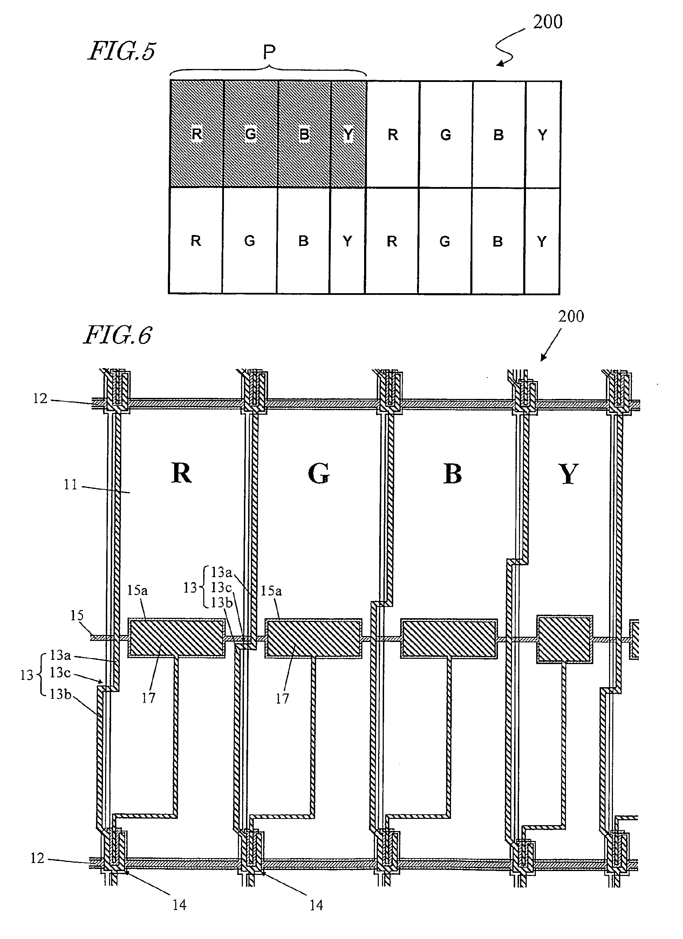

Hereinafter, a liquid crystal display device **200** as a second embodiment of the present invention will be described with reference to FIGS. **5** and **6.** In this liquid crystal display device **200,** red, green and blue pixels **R, G** and **B** have the larger area and yellow pixel **Y** has the smaller area as shown in FIGS. **5** and **6.** That is to say, the red, green and blue pixels **R, G** and **B** are the larger pixels and the yellow pixel **Y** is the smaller pixel.

In each picture element **P,** those four pixels are arranged in the order of red, green, blue and yellow pixels **R, G, B** and **Y** from the left to the right. Thus, those larger, larger, larger and smaller pixels are repeatedly arranged in this order in the row direction.

In this liquid crystal display device **200,** the respective bent portions **13c** of two arbitrary ones of the signal lines **13,** which are adjacent to each other in the row direction, are also arranged at mutually different positions in the column direction. Thus, the area of overlap between the pixel electrode **11** of the larger pixel (which is the red, green or blue pixel **R, G** or **B)** and the signal line **13** (i.e., its own source) that supplies a grayscale voltage to that pixel electrode **11** is greater than the area of overlap between the pixel electrode **11** of the smaller pixel (which is the yellow pixel **Y)** and a signal line **13** (its own source) that supplies a grayscale voltage to that pixel electrode **11.** That is why the source-drain capacitance **Csd** of the larger pixel is greater than the source-drain capacitance **Csd** of the smaller pixel. As a result, the difference in the magnitude of variation Δ**v** in drain voltage between the larger and smaller pixels can be reduced, and it is possible to avoid an unwanted situation where the voltages applied to the liquid crystal layer **30** have significantly different effective values between the larger and smaller pixels.

In this liquid crystal display device **200,** the areas of overlap between the pixel electrode **11** and their own source are different among the three larger pixels of each picture element **P.** That is why among those three larger pixels, their own source-drain capacitances **Csd(self)** do not agree with each other, neither do the magnitudes Δ**v** of variation in drain voltage. However, the display quality will be affected by not just the variation in ΔV but also the absolute value of ΔV as well. For that reason, even if ΔV varied to a certain degree among those larger pixels, ΔV of the smaller pixel would rather be reduced than be much greater than that of the larger pixels.

On top of that, in this liquid crystal display device **200,** the sum of the area of overlap between their own source and the pixel electrode **11** and the area of overlap between other's source and the pixel electrode **11** is substantially the same between those three larger pixels of each picture element **P.** That is why the sum of their own source-drain capacitance **Csd(self)** and other's source-drain capacitance **Csd(other)** is substantially the same between those three larger pixels. Consequently, the pixel charge rate and the influence of the voltage variation (ΔVd) due to a feedthrough phenomenon of a gate signal can be the same between those larger pixels, which is beneficial.

(EMBODIMENT 3)

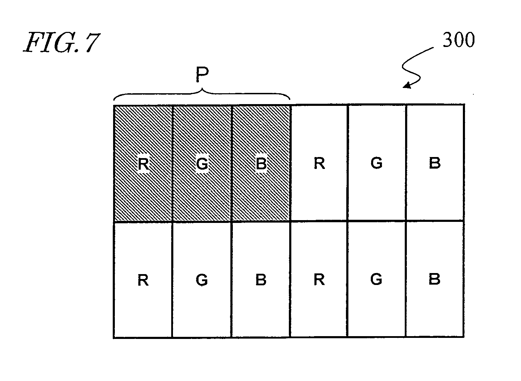

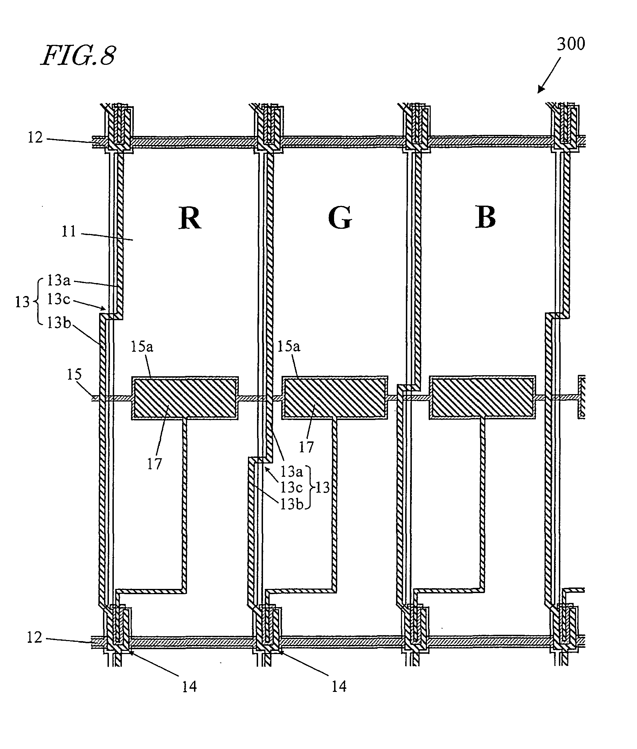

Hereinafter, a liquid crystal display device **300** as a third embodiment of the present invention will be described with reference to FIGS. **7** and **8.** As shown in FIGS. **7** and **8,** in this liquid crystal display device **300,** each picture element **P** is defined by red, green and blue pixels **R, G** and **B.** Thus, this liquid crystal display device **300** is not a multi-primary-color liquid crystal display device but a three-primary-color liquid crystal display device. Also, the respective areas of those red, green and blue pixels **R, G** and **B** are equal to each other. That is to say, in this liquid crystal display device 300, the areas of those pixels are the same and there are no larger pixels or smaller pixels.

In this liquid crystal display device 300, the respective bent portions **13c** of two arbitrary ones of the signal lines **13,** which are adjacent to each other in the row direction, are also arranged at mutually different positions in the column direction. Thus, the area of overlap between the pixel electrode **11** and the signal line **13** (i.e., its own source) that supplies a grayscale voltage to that pixel electrode **11** is greater in the blue pixel **B** than in the red pixel **R** and even greater in the green pixel **G** than in the blue pixel **B.** Consequently, the source-drain capacitance **Csd** of the blue pixel **R** is greater than that of the red pixel **R** and the source-drain capacitance **Csd** of the green pixel **G** is even greater than that of blue pixel **B.**

As can be seen, even if the respective pixels have the same area, the source-drain capacitance **Csd** of each of those pixels can be set to be an arbitrary value by arranging the bent portions **13a** of two adjacent signal lines 13 at mutually different positions in the column direction. As the color green achieves higher luminous efficacy than the color red or blue does, a display defect, if any, is more easily sensible to the eye at a green pixel **G** than at a red pixel **R** or a blue pixel **B** when the effective value of the voltage applied to the liquid crystal layer changes. That is why by setting the source-drain capacitance **Csd** of the green pixel **G** to be smaller than that of any other pixel (as opposed to the configuration shown in FIGS. **7** and **8),** the variation in the effective value of the green pixel **G** can be minimized.

(EMBODIMENT 4)

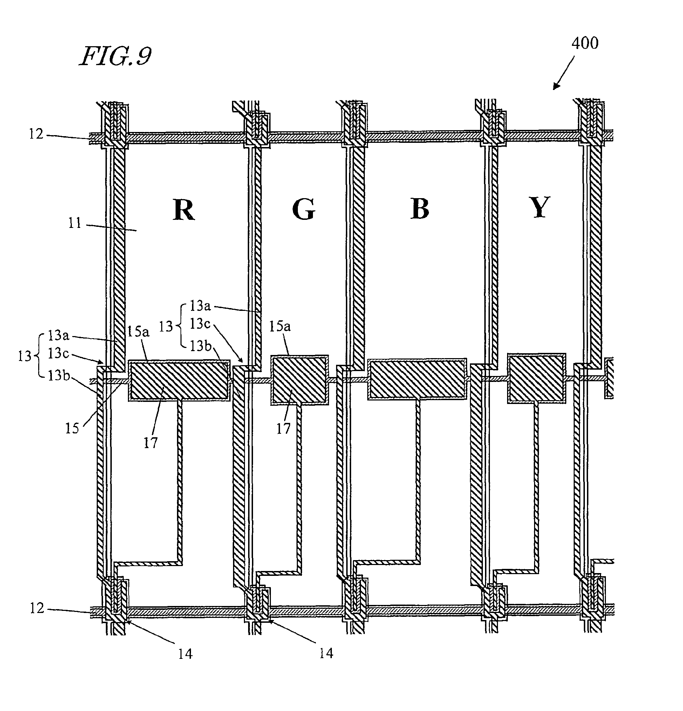

Hereinafter, a liquid crystal display device **400** as a fourth embodiment of the present invention will be described with reference to FIG. **9.** Just like each set of pixels of the liquid crystal display device **100,** each set of pixels of this liquid crystal display device **400** is also defined by red and blue pixels **R** and **B** with a relatively large area (that are the larger pixels) and green and yellow pixels **G** and **Y** with a relatively small area (that are the smaller pixels).

As shown in FIG. **9,** in this liquid crystal display device **400,** every signal line **13** has its bent portion **13c** at the same position in the column direction. Nevertheless, the first and second straight portions **13a** and **13b** of each of those signal lines **13** have mutually different widths. Specifically, as for the red **R** and blue **B** pixels' (i.e., the larger pixels') own source, the first straight portion **13a** is relatively broad and the second straight portion **13b** is relatively narrow. On the other hand, as for the green **G** and yellow **Y** pixels' (i.e., the smaller pixels') own source, the first straight portion **13a** is relatively narrow and the second straight portion **13b** is relatively broad.

If the width of each signal line **13** changes at its bent portion **13c** as described above, the area of overlap between the pixel electrode **11** of the larger pixel (which is the red or blue pixel **R** or **B**) and the signal line **13** (their own source) that supplies a grayscale voltage to that pixel electrode **11** is greater than the area of overlap between the pixel electrode **11** of the smaller pixel (which is the green or yellow pixel **G** or **Y**) and the signal line **13** (their own source) that supplies a grayscale voltage to that pixel electrode **11**. That is why the source-drain capacitance **Csd** of the larger pixel is greater than the source-drain capacitance **Csd** of the smaller pixel. As a result, the difference in the magnitude of variation $\Delta$**V** in drain voltage between the larger and smaller pixels can be reduced, and it is possible to avoid an unwanted situation where the voltages applied to the liquid crystal layer **30** have significantly different effective values between the larger and smaller pixels.

As described above, in the liquid crystal display device **400** of this embodiment, by setting the respective widths of the first and second straight portions **13a** and **13b** of each signal line **13** to be different from each other, the source-drain capacitance **Csd** of the larger pixels can be different from that of the smaller pixels. As a result, the variation in the effective voltage applied to the liquid crystal layer can be reduced significantly.

In the arrangement illustrated in FIG. **9,** the larger and smaller pixels are arranged alternately in the row direction. However, the larger and smaller pixels do not always have to be arranged in such a pattern. Alternatively, even if the arrangement shown in FIG. **5,** in which the larger, larger, larger and smaller pixels are repeatedly arranged in this order in the row direction, is adopted, the first and second straight portions **13a** and **13b** of the signal line **13** may also have mutually different widths so that the larger and smaller pixels have mutually different source-drain capacitances **Csd.** In that case, not every signal line **13,** but at least only some of those signal lines **13,** need to have the first and second straight portions **13a** with different widths. More specifically, only the signal line **13** that overlaps with both of the pixel electrodes **11** of the larger and smaller pixels needs to have first and second straight portions **13a** and **13b** with mutually different widths. Meanwhile, the signal line **13** that overlaps with only the pixel electrode **11** of the larger pixel may have the first and second straight portions **13a** and **13b** of the same width.

Furthermore, even in the arrangement shown in FIG. **7** in which every pixel has the same area, the first and second straight portions **13a** and **13b** of each signal line **13** may also have different widths so that the source-drain capacitance **Csd** of each pixel has an arbitrary value.

(EMBODIMENT 5)

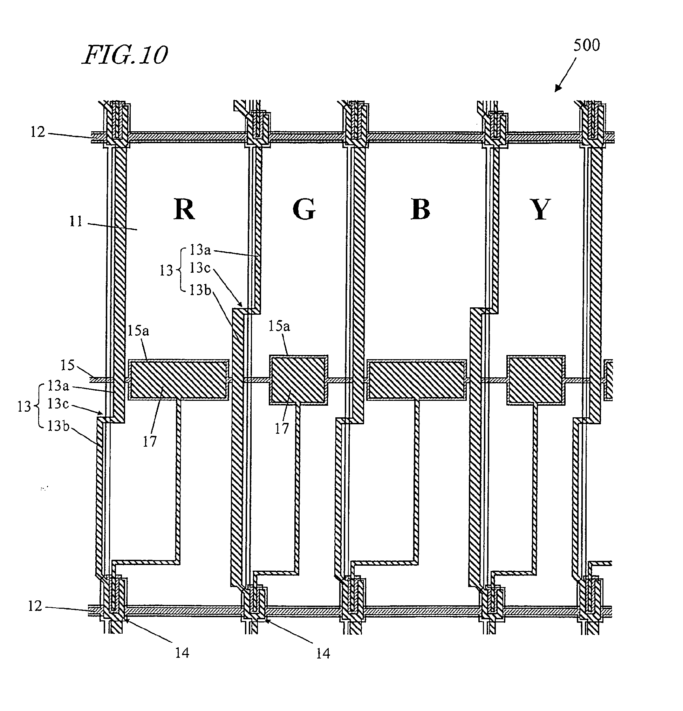

Hereinafter, a liquid crystal display device **500** as a fifth embodiment of the present invention will be described with reference to FIG. **10.** Just like each set of pixels of the liquid crystal display device **100,** each set of pixels of this liquid crystal display device **500** is also defined by red and blue pixels **R** and **B** with a relatively large area (that are the larger pixels) and green and yellow pixels **G** and **Y** with a relatively small area (that are the smaller pixels).

In this liquid crystal display device **500,** the respective bent portions **13c** of two arbitrary ones of the signal lines **13,** which are adjacent to each other in the row direction, are also arranged at mutually different positions in the column direction. Also, the first and second straight portions **13a** and **13b** of each of those signal lines **13** have mutually different widths. Specifically, as for the red **R** and blue **B** pixels' (i.e., the larger pixels') own source, the first straight portion **13a** is relatively broad and the second straight portion **13b** is relatively narrow. On the other hand, as for the green **G** and yellow **Y** pixels' (i.e., the smaller pixels') own source, the first straight portion **13a** is relatively narrow and the second straight portion **13b** is relatively broad.

As described above, in the liquid crystal display device **500** of this embodiment, the configuration in which the bent portions **13c** of two adjacent signal lines **13** are arranged at different positions in the column direction and the configuration in which the width of the signal line **13** is changed at its bent portion **13c** are combined, thereby setting the source-drain capacitances **Csd** of the larger and smaller pixels to be different from each other. As a result, the variation in the effective voltage applied to the liquid crystal layer can be reduced significantly.

In the example illustrated in FIG. **10,** the larger and smaller pixels are arranged alternately in the row direction. Naturally, however, any other arrangement (such as the one shown in FIG. 5) may also be adopted. Even so, by combining the configuration in which the bent portions **13c** of two adjacent signal lines **13** are arranged at different positions and the configuration in which the signal line **13** has portions with two different widths, the source-drain capacitances **Csd** of the larger and smaller pixels can be set to be different from each other.

Still alternatively, even if the respective pixels have the same area as shown in FIG. 7, the configuration in which the bent portions **13c** of two adjacent signal lines **13** are arranged at different positions and the configuration in which the signal line **13** has portions with two different widths may also be combined. In this manner, the source-drain capacitances **Csd** of the two kinds of pixels may also have arbitrary values, too.

(EMBODIMENT 6)

A liquid crystal display device as a sixth embodiment of the present invention can carry out a multi-pixel drive (pixel division drive) operation. By adopting the multi-pixel drive, the viewing angle dependence of the $\gamma$ (gamma) characteristic, which refers to a phenomenon that the $\gamma$ characteristic when the screen is viewed straight on is different from the characteristic when it is viewed obliquely, can be reduced significantly. In this case, the "$\gamma$ characteristic" refers to the grayscale dependence of display luminance. According to the multi-pixel drive, a single pixel is made up of multiple subpixels that can display mutually different luminances, thereby displaying a predetermined luminance associated with a display signal that has been supplied to the pixel. That is to say, the multi-pixel drive is a technique for reducing the viewing angle dependence of the $\gamma$ characteristic of a pixel by synthesizing together the mutually different $\gamma$ characteristics of multiple subpixels thereof.

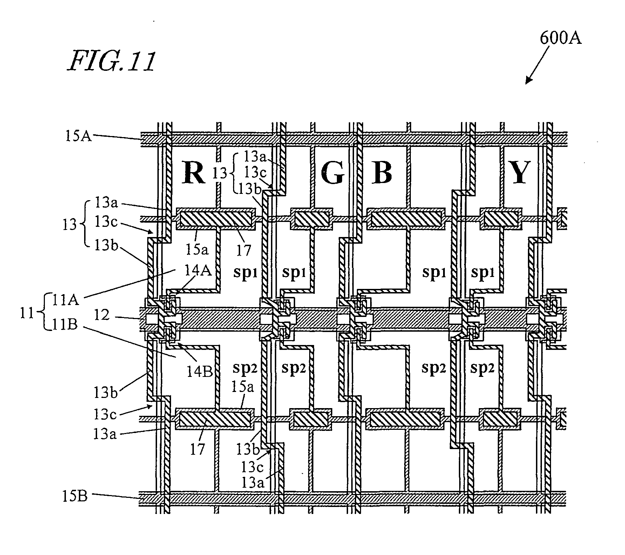

FIGS. 11 through 15 illustrate liquid crystal display devices 600A through 600E according to this embodiment. In these liquid crystal display devices 600A through 600E, each pixel includes multiple subpixels sp1 and sp2 that have a liquid crystal layer to which mutually different voltages can be applied. Those multiple (specifically, two in this case) subpixels sp1 and sp2 are arranged in the column direction. In the examples illustrated in FIGS. 11 through 15, each pixel has two subpixels sp1 and sp2. However, each pixel may also have three or more subpixels.

The pixel electrode 11 of each pixel also has two subpixel electrodes 11A and 11B, which are associated with the two subpixels sp1 and sp2, respectively, and which are connected to their associated TFTs 14A and 14B, respectively.

The respective gate electrodes of the two TFTs 14A and 14B are connected in common to the same scan line 12 and have their ON and OFF states controlled with the same gate signal. Also, the respective source electrodes of the two TFTs 14A and 14B are connected in common to the same signal line 13.

A storage capacitor is provided for each of the two subpixels sp1 and sp2. The storage capacitor electrode 17 that forms part of the storage capacitor of one subpixel sp1 is electrically connected to the drain electrode of the TFT 14A. On the other hand, the storage capacitor electrode 17 that forms part of the storage capacitor of the other subpixel sp2 is electrically connected to the drain electrode of the TFT 14B. Also, the storage capacitor counter electrode 15a that forms another part of the storage capacitor of the subpixel sp1 is electrically connected to the storage capacitor line 15A. On the other hand, the storage capacitor counter electrode 15a that forms another part of the storage capacitor of the subpixel sp2 is electrically connected to the storage capacitor line 15B. The respective storage capacitor counter electrodes 15a of the subpixels sp1 and sp2 are independent of each other and are supplied with mutually different voltages (i.e., storage capacitor counter voltages) through the storage capacitor lines 15A and 15B, respectively. By changing the storage capacitor counter voltages applied to the storage capacitor counter electrodes 15a, mutually different effective voltages can be applied to the respective liquid crystal layers 30 of the subpixels sp1 and sp2 by utilizing the capacitance division technique. As a result, the subpixels sp1 and sp2 can have mutually different display luminances.

The liquid crystal display devices 600A through 600E of this embodiment also have the configuration in which the bent portions 13c of two adjacent signal lines 13 are arranged at different positions in the column direction and/or the configuration in which the width of the signal line 13 is changed at its bent portion 13c (i.e., the signal line 13 has portions with two different widths).

Just like each set of pixels of the liquid crystal display device 100 of the first embodiment described above, each set of pixels of the liquid crystal display device 600A shown in FIG. 11 is also defined by red and blue pixels R and B with a relatively large area (that are the larger pixels) and green and yellow pixels G and Y with a relatively small area (that are the smaller pixels).

Each signal line 13 of the liquid crystal display device 600A has a set of first and second straight portions 13a and 13b and bent portion 13c in an area allocated to the one subpixel sp1 and also has further set of first and second straight portions 13a and 13b and bent portion 13c in an area allocated to the other subpixel sp2.

As shown in FIG. 11, the respective bent portions 13c (i.e., the bent portions 13c provided for the respective subpixels sp1 and sp2) of two arbitrary ones of the signal lines 13, which are adjacent to each other in the row direction, are also arranged at mutually different positions in the column direction. Thus, the area of overlap between the pixel electrode 11 of the larger pixel (which is the red or blue pixel R or B) and the signal line 13 (i.e., its own source) that supplies a grayscale voltage to that pixel electrode 11 is greater than the area of overlap between the pixel electrode 11 of the smaller pixel (which is the green or yellow pixel G or Y) and a signal line 13 (its own source) that supplies a grayscale voltage to that pixel electrode 11. That is why the source-drain capacitance Csd of the larger pixel is greater than the source-drain capacitance Csd of the smaller pixel. As a result, the difference in the magnitude of variation $\Delta V$ in drain voltage between the larger and smaller pixels can be reduced, and it is possible to avoid an unwanted situation where the voltages applied to the liquid crystal layer 30 have significantly different effective values between the larger and smaller pixels.

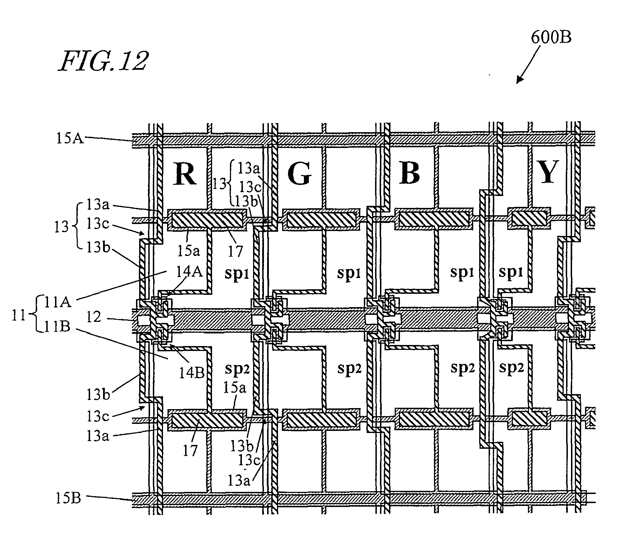

Just like each set of pixels of the liquid crystal display device 200 of the second embodiment described above, each set of pixels of the liquid crystal display device 600B shown in FIG. 12 is also defined by red, green and blue pixels **R, G** and **B** with a relatively large area (that are the larger pixels) and a yellow pixel **Y** with a relatively small area (that is the smaller pixels).

As shown in FIG. **12,** the respective bent portions **13c** (i.e., the bent portions **13c** provided for the respective subpixels **sp1** and **sp2**) of two arbitrary ones of the signal lines **13,** which are adjacent to each other in the row direction, are also arranged at mutually different positions in the column direction. Thus, the area of overlap between the pixel electrode **11** of the larger pixel (which is the red, green or blue pixel **R, G** or **B**) and the signal line **13** (i.e., its own source) that supplies a grayscale voltage to that pixel electrode **11** is greater than the area of overlap between the pixel electrode **11** of the smaller pixel (which is the yellow pixel **Y**) and a signal line **13** (its own source) that supplies a grayscale voltage to that pixel electrode **11**. That is why the source-drain capacitance **Csd** of the larger pixel is greater than the source-drain capacitance **Csd** of the smaller pixel. As a result, the difference in the magnitude of variation ΔV in drain voltage between the larger and smaller pixels can be reduced, and it is possible to avoid an unwanted situation where the voltages applied to the liquid crystal layer **30** have significantly different effective values between the larger and smaller pixels.

In the liquid crystal display devices **600A** and **600B** shown in FIGS. **11** and **12,** the respective bent portions **13c** of two adjacent signal lines **13** are arranged at two different positions in the column direction in both of the two subpixels **sp1** and **sp2**. However, the bent portions **13c** of two adjacent signal lines **13** do not have to be arranged at two different positions in every subpixel. That is to say, those bent portions **13c** need to be arranged at different positions in at least one of multiple subpixels that form each pixel. Nevertheless, to further improve the display quality, the bent portions **13c** of two adjacent signal lines **13** had better be arranged at two different positions in the column direction in every subpixel as is done in the liquid crystal display devices **600A** and **600B** of this embodiment. That is to say, not only one bent portion **13c** provided for one subpixel but also further bent portion **13c** provided for a different subpixel had better be arranged at different positions in the column direction between two adjacent signal lines **13**.

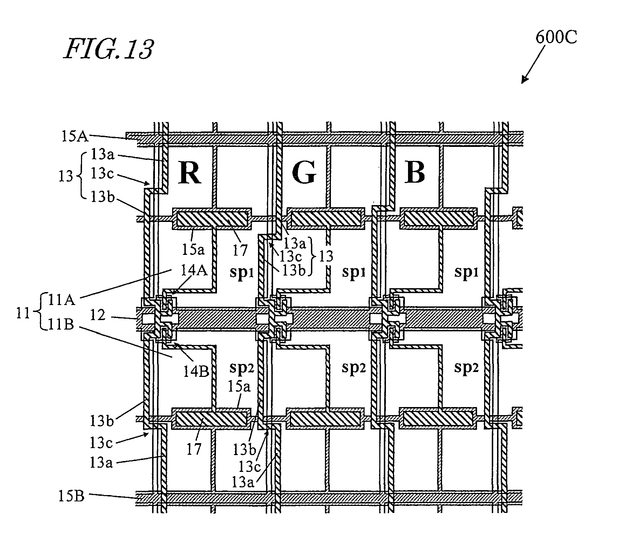

In the liquid crystal display device **600C** shown in FIG. **13,** each set of pixels is defined by red, green and blue pixels **R, G** and **B** that have the same area just like each set of pixels of the liquid crystal display device **300** of the third embodiment described above.

As shown in FIG. **13,** each signal line **13** has a bent portion **13c** provided for the subpixel **sp1** and further bent portion **13c** provided for the subpixel **sp2**. The bent portions **13c** provided for the subpixels **sp1** are arranged at different positions in the column direction between two adjacent signal lines **13**. On the other hand, the further bent portions **13c** provided for the subpixels **sp2** are arranged at the same position in the column direction between two adjacent signal lines **13**.

In this liquid crystal display device **600C,** the respective bent portions **13c** (i.e., the bent portions **13c** provided for the subpixels **sp1)** of two arbitrary ones of the signal lines **13,** which are adjacent to each other in the row direction, are also arranged at mutually different positions in the column direction. Thus, the area of overlap between the subpixel electrode **11A** and the signal line **13** (i.e., its own source) that supplies a grayscale voltage to that subpixel electrode **11A** is greater in the blue pixel **B** than in the red pixel **R** and even greater in the green pixel **G** than in the blue pixel **B**. Consequently, the source-drain capacitance **Csd** of the blue pixel **R** is greater than that of the red pixel **R** and the source-drain capacitance **Csd** of the green pixel **G** is even greater than that of blue pixel **B**.

As can be seen, even if the respective pixels have the same area, the source-drain capacitance **Csd** of each of those pixels can be set to be an arbitrary value by arranging the bent portions **13a** of two adjacent signal lines **13** at mutually different positions in the column direction.

In the liquid crystal display device **600C** shown in FIG. **13,** the further bent portions **13c** provided for the subpixels **sp2** are arranged at the same position in the column direction between two adjacent signal lines **13**. However, just like the bent portions **13c** provided for the subpixels **sp1,** the further bent portions **13c** provided for the subpixels **sp2** may also be arranged at different positions in the column direction between two adjacent signal lines **13**.

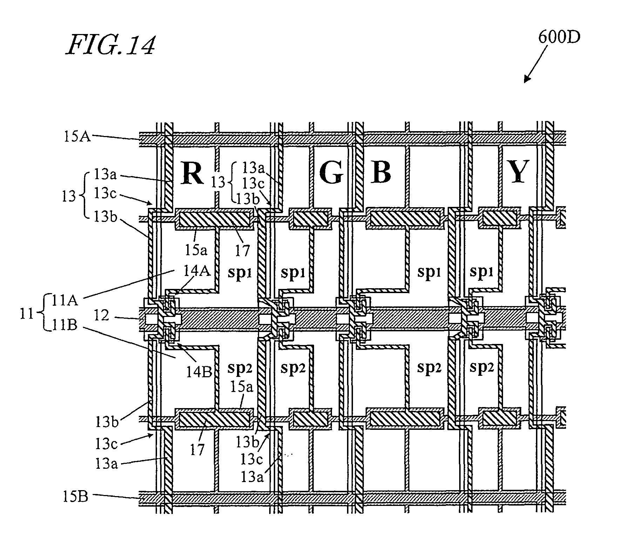

Just like each set of pixels of the liquid crystal display device **400** of the fourth embodiment, each set of pixels of the liquid crystal display device **600D** shown in FIG. **14** is also defined by red and blue pixels **R** and **B** with a relatively large area (that are the larger pixels) and green and yellow pixels **G** and **Y** with a relatively small area (that are the smaller pixels).

As shown in FIG. **14,** in this liquid crystal display device **600D,** every signal line **13** has its bent portion **13c** at the same position in the column direction. Nevertheless, the first and second straight portions **13a** and **13b** of each of those signal lines **13** have mutually different widths. Specifically, as for the red **R** and blue **B** pixels' (i.e., the larger pixels') own source, the first straight portion **13a** is relatively broad and the second straight portion **13b** is relatively narrow. On the other hand, as for the green **G** and yellow **Y** pixels' (i.e., the smaller pixels') own source, the first straight portion **13a** is relatively narrow and the second straight portion **13b** is relatively broad.

Thus, the area of overlap between the pixel electrode **11** of the larger pixel (which is the red or blue pixel **R** or **B)** and the signal line **13** (their own source) that supplies a grayscale voltage to that pixel electrode **11** is greater than the area of overlap between the pixel electrode **11** of the smaller pixel (which is the green or yellow pixel **G** or **Y)** and the signal line **13** (their own source) that supplies a grayscale voltage to that pixel electrode **11**. That is why the source-drain capacitance **Csd** of the larger pixel is greater than the source-drain capacitance **Csd** of the smaller pixel. As a result, the difference in the magnitude of variation ΔV in drain voltage between the larger and smaller pixels can be reduced, and it is possible to avoid an unwanted situation where the voltages applied to the liquid crystal layer have significantly different effective values between the larger and smaller pixels.

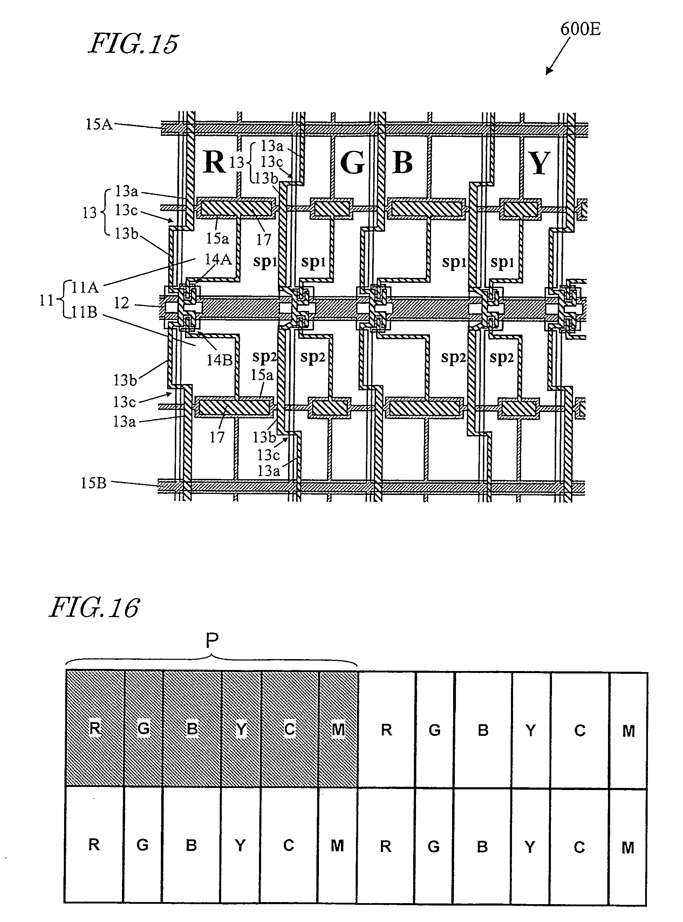

Just like each set of pixels of the liquid crystal display device **500** of the fifth embodiment described above, each set of pixels of the liquid crystal display device **600E** shown in FIG. **15** is also defined by red and blue pixels **R** and **B** with a relatively large area (that are the larger pixels) and green and yellow pixels **G** and **Y** with a relatively small area (that are the smaller pixels).

In this liquid crystal display device **600E,** the respective bent portions **13c** of two arbitrary ones of the signal lines **13,** which are adjacent to each other in the row direction, are also arranged at mutually different positions in the column direction as shown in FIG. **15**. Also, the first and second straight portions **13a** and **13b** of each of those signal lines **13** have mutually different widths. Specifically, as for the red **R** and blue **B** pixels' (i.e., the larger pixels') own source, the first straight portion **13a** is relatively broad and the second straight portion **13b** is relatively narrow. On the other hand, as for the green **G** and yellow **Y** pixels' (i.e., the smaller pixels') own source, the first straight portion **13a** is relatively narrow and the second straight portion **13b** is relatively broad.

As described above, in the liquid crystal display device **600E** of this embodiment, the configuration in which the bent portions **13c** of two adjacent signal lines **13** are arranged at different positions in the column direction and the configuration in which the width of the signal line **13** is changed at its bent portion **13c** are combined, thereby setting the source-drain capacitances **Csd** of the larger and smaller pixels to be different from each other. As a result, the variation in the effective voltage applied to the liquid crystal layer can be reduced significantly.

In the first through sixth embodiments of the present invention described above, one picture element **P** is supposed to be defined by four or three pixels as an example. However, the present invention is in no way limited to those specific embodiments. Optionally, each picture element **P** may also be defined by six pixels as shown in FIG. **16,** for example. In the arrangement shown in FIG. **16,** each picture element **P** includes not only red, green, blue, and yellow pixels **R, G,** B and **Y** but also a cyan pixel C representing the color cyan and a magenta pixel **M** representing the color magenta as well.

As for the respective kinds (i.e., the combination) of pixels that define a single picture element **P,** the combinations described above are just examples, too. For example, if each picture element **P** is defined by four pixels, each picture element **P** may be defined by either red, green, blue and cyan pixels **R, G,** B and **C** or red, green, blue and magenta pixels **R, G,** B and **M.** Alternatively, each picture element **P** may also be defined by red, green, blue and white pixels **R, G,** B and **W** as shown in FIG. **17**. If the arrangement shown in FIG. **17** is adopted, a colorless and transparent color filter (i.e., a color filter that transmits white light) is arranged in a region of the color filter layer of the counter substrate that is allocated to the white pixel **W.** With the arrangement shown in FIG. **17** adopted, the color reproduction range cannot be broadened because the primary color added is the color white, but the overall display luminance of a single picture element **P** can be increased.

## INDUSTRIAL APPLICABILITY

According to the present invention, the source-drain capacitance **Csd** can be set to be an arbitrary value on a pixel-by-pixel basis in a liquid crystal display device. The present invention is applicable to a multi-primary-color liquid crystal display device and can be used particularly effectively in a configuration in which pixels with mutually different areas are included in the same mix.

## REFERENCE SIGNS LIST

| | |
|---|---|
| **10** | active-matrix substrate |
| **10a, 20a** | transparent substrate |
| **11** | pixel electrode |
| **11A, 11B** | subpixel electrode |
| **12** | scan line |
| **13** | signal line |

| 13a | first straight portion |
| 13b | second straight portion |
| 13c | bent portion |
| 14, 14A, 14B | thin-film transistor (TFT) |
| 15, 15A, 15B | storage capacitor line |
| 15a | storage capacitor counter electrode |
| 16 | gate insulating film |
| 17 | storage capacitor electrode |
| 18 | interlayer insulating film |
| 19, 29 | alignment film |
| 20 | counter substrate |
| 21 | counter electrode |
| 30 | liquid crystal layer |
| 100, 200, 300, 400, 500 | liquid crystal display device |
| 600A, 600B, 600C, 600D, 600E | liquid crystal display device |
| P | picture element |
| R | red pixel |
| G | green pixel |
| B | blue pixel |
| Y | yellow pixel |
| C | cyan pixel |
| M | magenta pixel |
| W | white pixel |
| sp1, sp2 | subpixel |

**Claims**

1. A liquid crystal display device comprising:

a plurality of pixels arranged in columns and rows to form a matrix pattern;
an active-matrix substrate that includes pixel electrodes that are provided for the respective pixels, a plurality of scan lines that run in a row direction, and a plurality of signal lines that run in a column direction;
a counter substrate that faces the active-matrix substrate; and
a liquid crystal layer that is interposed between the active-matrix substrate and the counter substrate,

wherein each of the plurality of signal lines includes, in an area given to each of multiple pixel rows that are defined by those pixels, a first straight portion that overlaps with only one of two pixel electrodes that are adjacent to the signal line, a second straight portion that overlaps with only the other pixel electrode, and a bent portion that connects the first and second straight portions together, and

wherein the respective bent portions of two arbitrary ones of the signal lines, which are adjacent to each other in the row direction, are arranged at mutually different positions in the column direction.

2. The liquid crystal display device of claim 1, wherein in at least some of the signal lines, the first and second straight portions have mutually different widths.

3. A liquid crystal display device comprising:

   a plurality of pixels arranged in columns and rows to form a matrix pattern;
   an active-matrix substrate that includes pixel electrodes that are provided for the respective pixels, a plurality of scan lines that run in a row direction, and a plurality of signal lines that run in a column direction;
   a counter substrate that faces the active-matrix substrate; and
   a liquid crystal layer that is interposed between the active-matrix substrate and the counter substrate,
   wherein each of the plurality of signal lines includes, in an area given to each of multiple pixel rows that are defined by those pixels, a first straight portion that overlaps with only one of two pixel electrodes that are adjacent to the signal line, a second straight portion that overlaps with only the other pixel electrode, and a bent portion that connects the first and second straight portions together, and
   wherein in at least some of the signal lines, the first and second straight portions have mutually different widths.

4. The liquid crystal display device of one of claims 1 to 3, wherein each of the multiple pixel rows includes a larger pixel that has a relatively large area and a smaller pixel that has a relatively small area.

5. The liquid crystal display device of claim 4, wherein the area of overlap between the pixel electrode of the larger pixel and a signal line that supplies a grayscale voltage to the pixel electrode of that larger pixel is greater than the area of overlap between the pixel electrode of the smaller pixel and a signal line that supplies a grayscale voltage to the pixel electrode of that smaller pixel.

6. The liquid crystal display device of claim 4 or 5, wherein the Csd/Cpix ratio of the source-drain capacitance Csd of the larger pixel to a pixel capacitance Cpix is substantially equal to the Csd/Cpix ratio of the source-drain capacitance Csd of the smaller pixel to the pixel capacitance Cpix.

7. The liquid crystal display device of one of claims 4 to 6, wherein the larger and smaller pixels are arranged alternately in the row direction.

8. The liquid crystal display device of claim 7, wherein the area of overlap between one of two signal lines that are adjacent to the larger pixel and the pixel electrode of that larger pixel is substantially equal to the area of overlap between the other signal line and the pixel electrode of that larger pixel, and
   wherein the area of overlap between one of two signal lines that are adjacent to the smaller pixel and the pixel electrode of that smaller pixel is substantially equal to the area of overlap between the other signal line and the pixel electrode of that smaller pixel.

9. The liquid crystal display device of one of claims 1 to 8, wherein the plurality of pixels includes red, green and blue pixels that represent the colors red, green and blue, respectively.

10. The liquid crystal display device of claim 9, wherein the plurality of pixels further includes a yellow pixel that represents the color yellow.

11. The liquid crystal display device of claim 10, wherein the red pixel is the larger pixel.

12. The liquid crystal display device of claim 11, wherein the blue pixel is the larger pixel and the green and yellow pixels are the smaller pixels.

13. The liquid crystal display device of one of claims 1 to 12, wherein each of the plurality of pixels includes a plurality of subpixels, mutually different voltages being applicable to the respective liquid crystal layers of the subpixels.

**14.** The liquid crystal display device of claim 13, wherein the plurality of subpixels are arranged in the column direction, and wherein the bent portion is arranged at a position that has been set for a particular one of the subpixels and each of the plurality of signal lines has a further bent portion that is arranged at a position that has been set for a different subpixel from that particular subpixel.

**15.** The liquid crystal display device of claim 14, wherein the respective further bent portions of two arbitrary ones of the signal lines, which are adjacent to each other in the row direction, are arranged at mutually different positions in the column direction.

FIG.1

FIG.2

*FIG.3*

*FIG.4*

*FIG.5*

200

P

| R | G | B | Y | R | G | B | Y |
|---|---|---|---|---|---|---|---|
| R | G | B | Y | R | G | B | Y |

*FIG.6*

200

FIG.7

*FIG.8*

300

12

R  G  B

11

13 { 13a
      13c
      13b

15a      15a

15

17        17

13a
13c } 13
13b

12

14        14

FIG.9

FIG.10

*FIG.11*

600A

FIG.12

*FIG.13*

600C

## FIG.14

600D

15A

13 { 13a
13 { 13c
13 { 13b

R  13 { 13a
        13c
        13b

G   B   Y

15a   17

14A   sp1   sp1   sp1   sp1

11 { 11A
11 { 11B

12

14B   sp2   sp2   sp2   sp2
15a

13b   17   13b
13c        13c
13a        13a

15B

FIG.15

600E

FIG.16

*FIG.17*

P

| R | G | B | W | R | G | B | W |
|---|---|---|---|---|---|---|---|
| R | G | B | W | R | G | B | W |

*FIG.18*

800

P

| R | G | Y | B | R | G | Y | B |
|---|---|---|---|---|---|---|---|
| R | G | Y | B | R | G | Y | B |

*FIG.19*

900

P

| R | G | R | G |
|---|---|---|---|
| B | Y | B | Y |
| R | G | R | G |
| B | Y | B | Y |

*FIG.20*

SOURCE SIGNAL

DRAIN VOLTAGE

$\updownarrow$ Vspp

$\downarrow \Delta$ V

<div align="center">

**INTERNATIONAL SEARCH REPORT**

</div>

| | International application No. |
|---|---|
| | PCT/JP2010/072253 |

**A. CLASSIFICATION OF SUBJECT MATTER**
*G02F1/1343*(2006.01)i, *G02F1/1368*(2006.01)i

According to International Patent Classification (IPC) or to both national classification and IPC

**B. FIELDS SEARCHED**

Minimum documentation searched (classification system followed by classification symbols)
G02F1/1343, G02F1/1368

Documentation searched other than minimum documentation to the extent that such documents are included in the fields searched
Jitsuyo Shinan Koho          1922-1996   Jitsuyo Shinan Toroku Koho   1996-2011
Kokai Jitsuyo Shinan Koho   1971-2011   Toroku Jitsuyo Shinan Koho   1994-2011

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | JP 11-352513 A  (Toshiba Corp.), <br> 24 December 1999 (24.12.1999), <br> paragraphs [0018] to [0030]; fig. 1 <br> & US 6259493 B1          & TW 548452 B <br> & KR 10-2000-5852 A | 1-15 |
| A | JP 2004-70315 A  (L.G. Philips LCD Co., Ltd.), <br> 04 March 2004 (04.03.2004), <br> paragraphs [0031] to [0037]; fig. 7A, 7B <br> & US 7242452 B2          & DE 10329334 A <br> & KR 10-2004-11867 A     & TW 233521 B <br> & CN 1472580 A | 1-15 |
| A | JP 2008-3557 A  (AU Optronics Corp.), <br> 10 January 2008 (10.01.2008), <br> paragraphs [0031] to [0042]; fig. 3 to 5 <br> & US 2007-296879 A1     & KR 10-2007-121498 A | 1-15 |

☒ Further documents are listed in the continuation of Box C.          ☐ See patent family annex.

| | |
|---|---|
| * Special categories of cited documents: <br> "A" document defining the general state of the art which is not considered to be of particular relevance <br> "E" earlier application or patent but published on or after the international filing date <br> "L" document which may throw doubts on priority claim(s) or which is cited to establish the publication date of another citation or other special reason (as specified) <br> "O" document referring to an oral disclosure, use, exhibition or other means <br> "P" document published prior to the international filing date but later than the priority date claimed | "T" later document published after the international filing date or priority date and not in conflict with the application but cited to understand the principle or theory underlying the invention <br> "X" document of particular relevance; the claimed invention cannot be considered novel or cannot be considered to involve an inventive step when the document is taken alone <br> "Y" document of particular relevance; the claimed invention cannot be considered to involve an inventive step when the document is combined with one or more other such documents, such combination being obvious to a person skilled in the art <br> "&" document member of the same patent family |

| Date of the actual completion of the international search <br> 14 January, 2011 (14.01.11) | Date of mailing of the international search report <br> 25 January, 2011 (25.01.11) |
|---|---|
| Name and mailing address of the ISA/ <br> Japanese Patent Office | Authorized officer |
| Facsimile No. | Telephone No. |

Form PCT/ISA/210 (second sheet) (July 2009)

**INTERNATIONAL SEARCH REPORT**

| International application No. |
|---|
| PCT/JP2010/072253 |

C (Continuation).   DOCUMENTS CONSIDERED TO BE RELEVANT

| Category* | Citation of document, with indication, where appropriate, of the relevant passages | Relevant to claim No. |
|---|---|---|
| A | WO 2007/148519 A1 (Sharp Corp.),<br>27 December 2007 (27.12.2007),<br>page 4, lines 12 to 15; page 23, line 8 to<br>page 29, 2nd line from the bottom<br>& US 2009-115952 A1      & EP 2040243 A1<br>& CN 101449308 A | 10-12 |
| A | JP 6-230422 A (Fujitsu Ltd.),<br>19 August 1994 (19.08.1994),<br>paragraphs [0016] to [0029]; fig. 1, 5<br>(Family: none) | 1-15 |

Form PCT/ISA/210 (continuation of second sheet) (July 2009)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2004529396 PCT

- JP 2007148519 PCT

**Non-patent literature cited in the description**

- **M. R. POINTER.** The Gamut of Real Surface Colors. *Color Research and Application,* 1980, vol. 5 (3), 145-155